# EUROPEAN PATENT APPLICATION

(11) **EP 1 176 035 A2**
(43) Date of publication of application: **30.01.2002**
(21) Application number: 01113721.3
(22) Date of filing: 05.06.2001
(51) Int. Cl.: B60C 29/02

(54) **Valve for tubeless bicycle tires**

(30) Priority: 27.07.2000 IT MI001728
(71) Applicant: BRIDGEPORT BRASS S.P.A., I-24036 Ponte San Pietro, (Bergamo) (IT)
(72) Inventor: Leo, Leonardo, 25065 Lumezzane (BS) (IT); Gori, Giuseppe, 24068 Seriate (BG) (IT)
(74) Representative: Petruzziello, Aldo

(57) **Abstract**

A valve for tubeless bicycle tires destined to be mounted in a circumferential seat (50) formed in the peripheral part of a rim (5) of a wheel, the valve comprising a mechanism (3) for the passage of air for inflating/deflating the tire, a valve body (2) containing the mechanism (3) and destined to be housed in a hole (52) formed in the rim (5) and communicating with said seat (50) for accommodating the tire, a gasket (4) with a substantially frusto-conical shape to ensure the tight seal of the valve body (2) inside the hole (52) in the rim (5).

## Description

The present invention refers to a valve for tubeless tires particularly suitable to be fitted on the rims of bicycle wheels able to accommodate tubeless tires.

Tubeless tires, that is to say tires that do not have inside them a tubular element of rubber material destined to be filled with air for inflation of the tire, are increasingly widely used.

Said tubeless tires are applied to the circumferential seat of a wheel rim. Consequently, an inflating valve is mounted directly on the wheel rim.

Said valve has an inlet end which protrudes outward from the wheel rim to receive the nozzle of an air input device and an outlet end communicating with the inside of the tire to allow air to be introduced for inflation thereof. Valves of this type are commonly known as tubeless valves because they are not fitted on tubular inner tubes.

In order to mount tubeless valves according to the prior art, a radial through hole is formed in the circumferential part of the rim of the wheel.

Furthermore, an additional operation of spot facing of the hole in the rim is required to create a suitable seat to receive an OR type gasket for the valve seal.

Tires for bicycle wheels generally have an air tube or inner tube bearing an integral inflation valve. Tubeless tires suitable to be mounted on bicycle wheel rims are not widely used at present. Consequently, valves for tubeless tires suitable to be applied to the rim of a bicycle wheel have not been realized.

The object of the present invention is to provide a valve for tubeless tires that is economical, versatile, practical and simple to make.

Another object of the present invention is to provide such a valve for tubeless tires suitable to be applied to the rim of a bicycle wheel.

These objects are achieved according to the invention with the characteristics listed in appended independent claim 1.

Advantageous embodiments of the invention are apparent from the dependent claims.

The valve for tubeless tires according to the invention comprises a gasket with a substantially frusto-conical shape disposed on the valve body and intended to engage in a tapered seat provided in a hole in the rim in which the valve is fixed.

In this manner additional operations of spot facing of the hole in the rim to form a seat suitable to receive an OR gasket employed in prior art valves are avoided.

Furthermore, assembly of the valve according to the invention proves extremely simple since, thanks to the seal of the frusto conical gasket, no auxiliary means are required to stop the rotatory movement of the valve during assembly.

Further characteristics of the invention will be made clearer by the detailed description that follows, referring to a purely exemplary and therefore non-limiting embodiment thereof, illustrated in the appended drawings, in which:
Figure 1 is a view partially in axial section of a valve according to the invention applied to a rim;
Figure 2 is an exploded view of the valve in Figure 1 and of the rim, in which a different protective cap is shown.

The valve according to the invention, designated as a whole with reference numeral 1, is described with the aid of the figures.

The valve 1 comprises a body 2, a mechanism 3 which is mounted inside the body 2 and a gasket 4 which is applied to the body 2.

The body 2 has a substantially hollow cylindrical shape and has a duct 21 axially. The duct 21 has a threaded part 22 and a tapered part 23.

In its outer surface, the body 2 has an annular seat 24 delimited by an annular abutment plate 25 disposed at one end of the body 2 and a flared part 26 of the body 2. The outer surface of the body 2, after the seat 24, has an outer thread 27.

The mechanism 3 comprises a body 30 with an axial duct 31 having at its ends an air inlet hole 39 and an air outlet hole 35.

A stem 32 with two end parts protruding from the ends of the body 30 is housed inside the duct 31. A first cup-shaped valve member 33 with a gasket 34 to close the outlet hole 35 of the duct 31 is fixed to one end of the stem 30. An abutment surface 36 is provided at the other end of the stem 32. A second valve member 38 is provided in an intermediate part of the stem to close the duct 31 and the outlet hole 39 from the inside.

Around the stem 32, outside the body 30, a spring 37 acting between the end of the body 30 and the abutment surface 36 to maintain the stem 32 in the extracted position is provided. When the stem 32 is in the extracted position, the first valve member 33 with the gasket 34 and the second valve member 38 respectively close the outlet hole 35 and the inlet hole 39 of the body 30 of the mechanism 3.

The spring 37 is compressed by means of axial pressure on the end 36 of the stem and the holes 39 and 35 are opened, allowing air to pass through the duct 31.

The outer surface of the body 30 of the mechanism 3 has an annular seat to receive a gasket 300 and a body part 30 has an outer thread 301.

The mechanism 3 is inserted inside the duct 21 of the body 2 of the valve. When the outer thread 301 of the body 30 of the mechanism 3 is screwed into the inner thread 22 of the valve body 2, the gasket 300 settles inside the tapered seat 23 of the duct 21 of the valve body 2 providing a tight seal of the mechanism 2.

The gasket 4 has a frusto-conical shape in axial section and an annular shape in cross section. The gasket 4 has an axial through hole 40 with substantially the same diameter as the seat 24 of the valve body 2. Thus the gasket 4 is inserted on the valve body 2 and housed in its seat 24, so as to be disposed in abutment against the stop plate 25.

In the figures a rim of a bicycle wheel, designated as whole by reference numeral 5, has been illustrated by way of example. The rim 5 has a seat 50 able to accommodate a tire (not shown).

The rim 5 has a cylindrical tang 51 which protrudes radially therefrom in the opposite direction with respect to the seat 50 of the tire. The tang 51 has an axial through hole 52 which continues with a tapered hole 53 communicating with the seat 50 for accommodating the tire.

The valve 1, complete with the mechanism 3 and the gasket 4, is inserted from the seat side 50 into the hole 52 in the rim 5. Consequently the gasket 4 is disposed in the tapered seat 53 of the hole 52 in the rim 5 and the threaded part 27 of the body 2 protrudes outward from the tang 51 of the rim 5.

To secure the valve 1 to the rim 5 a locknut 6 with an inner thread 60 is provided. Once the valve 1 has been inserted in the hole 52 in the rim, the locknut 6 is screwed onto the thread 27 of the valve body 2.

When the locknut 6 comes into abutment against the end of the tang 51 of the rim 5, the gasket 4 settles completely into the tapered seat 53, ensuring a tight seal between the valve 1 and the rim 5 and preventing rotation of the valve with respect to the rim. In this manner the locknut 6 can be screwed on, without the need to resort to auxiliary locking means to prevent rotation of the valve 1.

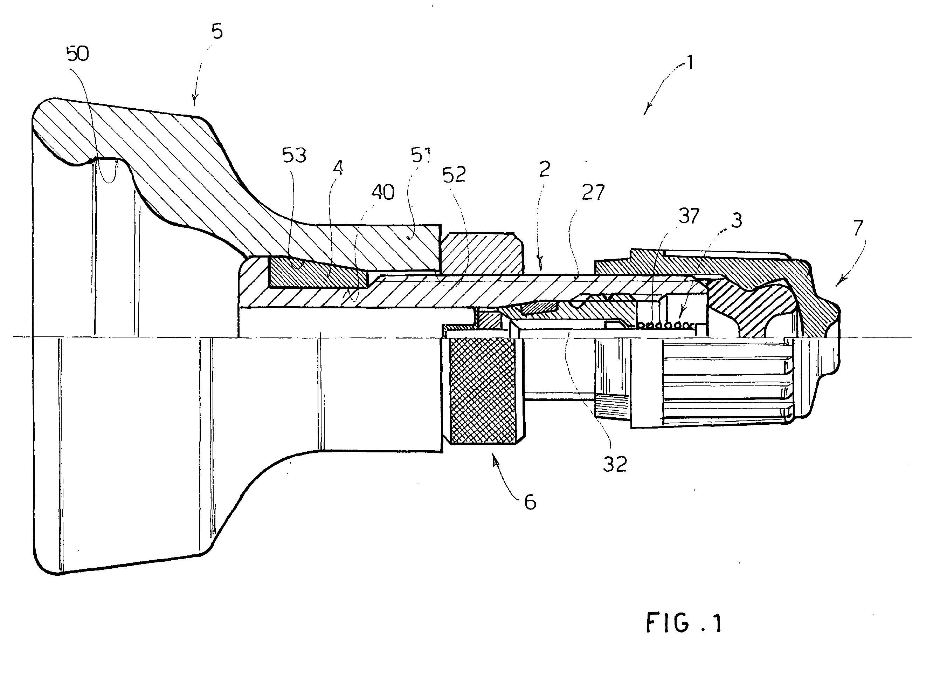

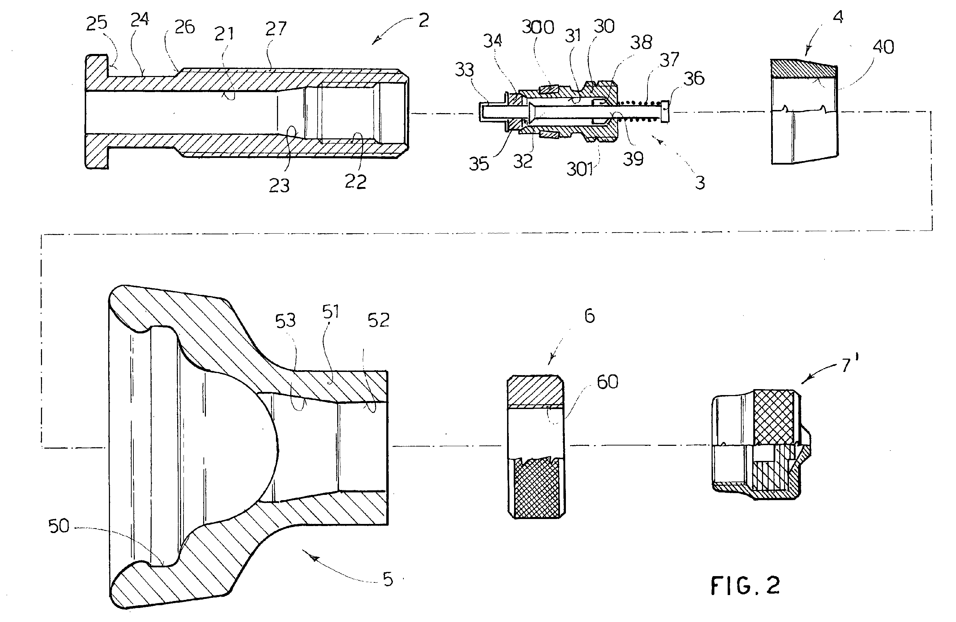

Once the valve 1 has been mounted, a protective cap 7, 7', per se known and therefore not described in detail, can be screwed into the top of the valve. Figure 1 shows a protective cap 7 made of plastic, while Figure 2 shows a protective cap made of sheet aluminium.

## Claims

1. A valve for tubeless bicycle tires destined to be mounted in a circumferential seat (50) made in the peripheral part of a wheel rim (5), the valve comprising:
- a mechanism (3) for the passage of air for inflation/deflation of the tire,
- a valve body (2) containing said mechanism (3), housed in a hole (52) made in said rim (5) and communicating with said seat (50) for accommodating the tire,
- a gasket (4) to provide a tight seal for said valve body (2) inside said hole (52) in the rim (5).

2. A valve according to claim 1, **characterized in that** said gasket (4) has a substantially frusto-conical shape.

3. A valve according to claim 1 or 2, **characterized in that** said gasket (4) is accommodated in a tapered seat provided in said hole (52) in the rim (5).

4. A valve according to any one of the preceding claims, **characterized in that** the body (2) of said valve (1) comprises an annular seat (24) able to accommodate said gasket (4).

5. A valve according to claim 4, **characterized in that** said annular seat (24) is defined by two abutment surfaces (25, 26) retaining the ends of said gasket (4).

6. A valve according to any one of the preceding claims, **characterized in that** the body of said valve has an outer thread (27) able to engage with the inner thread of a locknut (6) to secure said valve to the rim (5).
